# EUROPEAN PATENT SPECIFICATION

(11) **EP 2 312 391 B1**
(45) Date of publication and mention of the grant of the patent: **20.06.2012**
(21) Application number: 10013647.2
(22) Date of filing: 14.10.2010
(51) Int. Cl.: G03B 21/14, H04N 5/63, H04N 9/31, H05B 41/14, H05B 41/288

(54) **Projection display device and electronic device comprising a standby circuit.**
Projektionsanzeigevorrichtung und elektronische Vorrichtung mit Ruhezustandsschaltung.
Dispositif d'affichage de projection et dispositif électronique comprenant un circuit de veille.

(30) Priority: 15.10.2009 JP 2009238583
(43) Date of publication of application: 20.04.2011
(73) Proprietor: Sanyo Electric Co., Ltd., Osaka 570-8677 (JP)
(72) Inventor: Kotani, Kazunori, Moriguchi-shi Osaka 570-8677 (JP); Kokawa, Hiroyuki, Moriguchi-shi Osaka 570-8677 (JP); Otsuka, Hiroki, Moriguchi-shi Osaka 570-8677 (JP)
(74) Representative: Glawe, Delfs, Moll

(56) References cited:
- EP-A2- 0 739 778
- JP-A- 2006 109 605
- US-A- 5 136 397
- US-A1- 2002 153 780

## Description

### BACKGROUND OF THE INVENTION

### 1. Field of the Invention

The present invention relates to a projection display device according to the preamble of claim 1 for modulating light from a light source and projecting the modulated light onto a projection plane, and an electronic device such as the projection display device or the like.

### 2. Disclosure of Related Art

Such a device is known from document JP 2006109605A.

A similar device is disclosed in US 5 136397A.

In general, a projection display device (hereinafter, referred to as "projector"), when connected to a commercial power source, enters into a standby state with power supply from a power source section to a control section. In the standby state, when a main switch (power switch) is turned on, the control section activates a lamp, liquid crystal panels and others to start operation of the projector. After that, when the main switch is turned off on the projector in an operational state, the control section performs a predetermined shutdown process to return the projector into a standby state.

An electronic device such as a projector or the like may be configured to reduce power consumption in a standby state. In such a configuration, the electronic device is provided with a switch section for supplying and shutting off power from a commercial power source to a main power source section, a standby control section for operating the switch section, and a standby power source section for supplying power to the standby control section, for example. In this case, when the electronic device enters into a standby state, the power supply to the main power source section is shut off.

To accomplish the foregoing configuration, it is necessary to dispose additional circuit sections in relation to the switch section and the standby power source section. In this case, these circuit sections can be desirably arranged in an efficient manner with as few changes as possible made to the existing configuration including dimensions of a housing, layout of internal components, and others.

### SUMMARY OF THE INVENTION

A projection display device according to claim 1 of the present invention includes: a light source; a light modulating section that modulates light from the light source; a main control section that drives and controls the light source and the light modulating section for operation; a standby control section that performs control in a standby state; a main power source unit that supplies power to the main control section; and a standby power source unit that, in the standby state, shuts off power supply from a commercial power source to the main power source unit and supplies power to the standby control section. In this arrangement, the standby power source unit is disposed on a substrate different from that the main power source unit is disposed on.

According to the projection display device in the first aspect of the present invention, the standby power source unit can be disposed in a vacant space within the housing, which realizes smooth reduction in standby power while suppressing design change as much as possible.

In the projection display device in the first aspect of the present invention, the standby power source unit may be configured to have a power source section that supplies power to the standby control section, and a switch section that connects or shuts off a power supply line for supplying power from a commercial power source to the main power source unit, in accordance with a signal from the standby control section.

In this case, the standby power source unit may be further configured in such a manner that power is supplied to the power source section from the power supply line on an upstream side of the switch section and a fuse is interposed between the power supply line and the power source section.

In such a configuration, if a line from the fuse to the power source section is formed in a conductive pattern, the conductive pattern can be made narrower to reduce the standby power source unit in size. In addition, power distributed from the power source line is supplied to the power source section, which eliminates the need to prepare two power cables for supplying power to the power source line and the power source section, thereby resulting in decrease the number of cables.

Further, according to the invention a noise filter is interposed between the commercial power source and the standby power source unit.

In such a configuration, it is possible to achieve noise reduction in both the main power source unit and the power source section by only one noise filter.

Furthermore, a shutoff device is also interposed between the noise filter and the standby power source unit to shut off the power supply line if the light source overheats.

In such a configuration, it is possible to shut off power supply to both the main power source unit and the standby power source unit if the light source overheats.

The projection display device according to claim 1 of the present invention includes: a main control section that performs control in a normal operational state; a standby control section that performs control in a standby state; a main power source unit that supplies power to the main control section; a standby power source unit that, in the standby state, shuts off power supply from a commercial power source to the main power source unit and supplies power to the standby control section. In this arrangement, the standby power source unit is disposed on a substrate different from that the main power source unit is disposed on.

According to the configuration of the present invention, as the first aspect of the present invention, it is possible to realize smooth reduction in standby power while suppressing design changes as much as possible.

### BRIEF DESCRIPTION OF THE DRAWINGS

The foregoing and other objects and novel features of the present invention will be more fully understood from the following description of a preferred embodiment when reference is made to the accompanying drawings.
FIG. 1 is an external perspective view of a configuration of a projector in an embodiment of the present invention;
FIG. 2 is a diagram showing a configuration of an optical engine in the embodiment;
FIG. 3 is a block diagram showing a configuration of the projector in the embodiment;
FIG. 4 is a diagram showing a configuration of a standby power source unit in the embodiment;
FIG. 5 is a diagram for describing the effect of a current fuse disposed in the standby power source unit in the embodiment;
FIGs. 6A and 6B are diagrams for describing a connection structure of a main power source unit, the standby power source unit, and a noise filter unit in the embodiment, and a connection structure of the main power source unit and the noise filter unit in a conventional configuration;
FIGs. 7A and 7B are diagrams showing a process flow of a standby control section and a main control section in the embodiment;
FIG. 8 is a block diagram showing a configuration of a projector in modification example 1; and
FIGs. 9A and 9B are diagram for describing a connection structure of a main power source section, a standby power source unit, and a noise filter section in modification example 1, and a connection structure of a main power source section in a main power source unit and a noise filter section in a conventional configuration.

However, the drawings are only for purpose of description, and do not limit the scope of the present invention.

### DESCRIPTION OF PREFERRED EMBODIMENTS

A projector in an embodiment of the present invention will be described below with reference to the drawings.

In this embodiment, a lamp 21 is equivalent to a "light source" recited in the claims; liquid crystal panels 23, 24, and 25 to a "light modulating section" recited in the claims; a relay 440 to a "switch section" recited in the claims; a standby power source section 450 to a "power source section" recited in the claims; and a thermostat 600 to a "shutoff device" recited in the claims. However, the foregoing correspondences between the claims and this embodiment are shown as merely examples, and the claims are not limited by this embodiment.

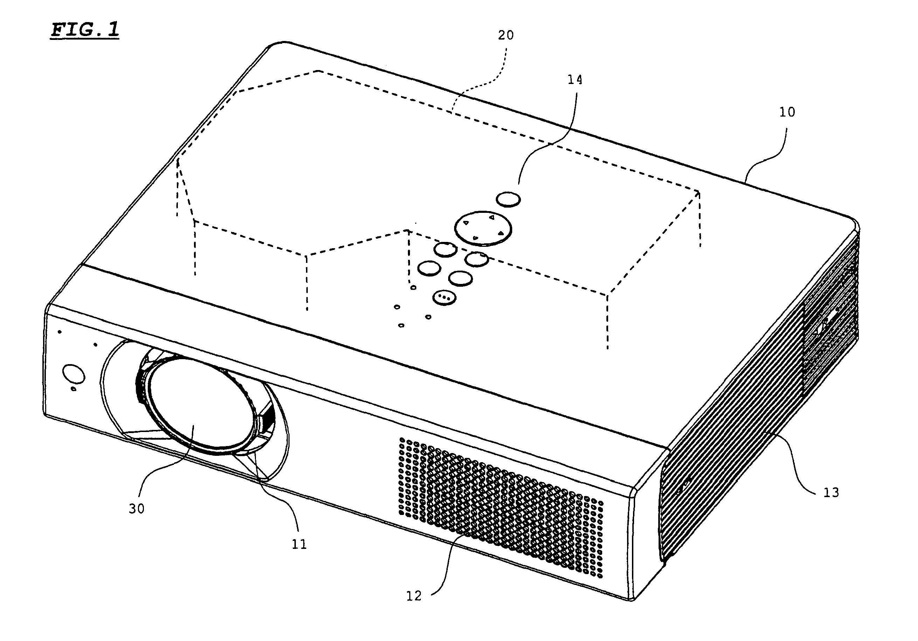

FIG. 1 is a perspective external view of a configuration of a projector. Referring to FIG. 1, the projector includes a cabinet 10 in the shape of a horizontally long, approximate rectangular parallelepiped. The cabinet 10 has a projection window 11 on a left side of a front surface thereof, and exhaust openings 12 and 13 for discharging air from an interior of the cabinet 10 on a right side of the front surface and a right surface thereof. In addition, the cabinet 10 has an operating section 14 with a plurality of operation buttons such as a main switch on a top surface thereof.

The cabinet 10 has an optical engine 20 and a projection lens 30 therewithin. The optical engine 20 generates image light modulated in accordance with an image signal. The projection lens 30 is attached to the optical engine 20, and a front end of the projection lens 30 is exposed forward at the projection window 11. The projection lens 30 enlarges and projects the image light generated by the optical engine 20 onto a screen plane arranged in front of the projector.

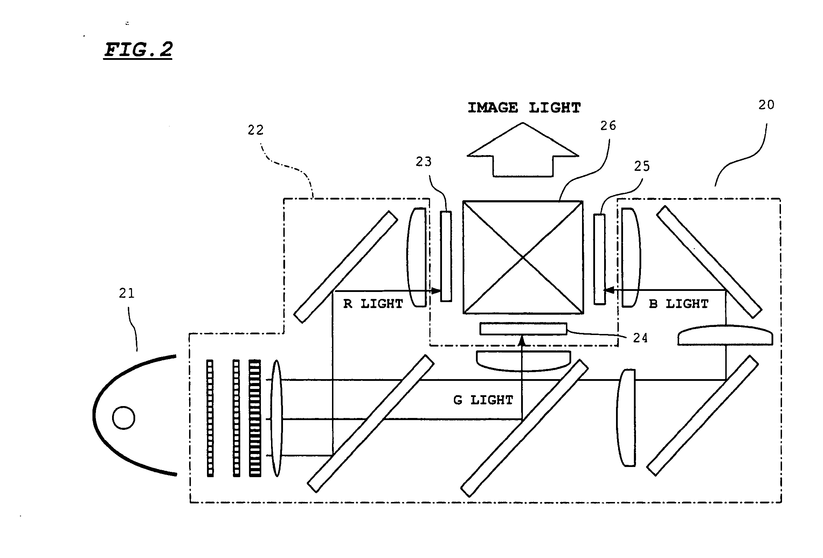

FIG. 2 is a diagram showing a configuration of the optical engine 20.

As shown in FIG. 2, the optical engine 20 includes a lamp 21, a light-guiding optical system 22, three transmissive liquid crystal panels 23, 24, and 25, and a dichroic prism 26. In addition, polarizers (not shown) are disposed on incident sides and output sides of the liquid crystal panels 23, 24, and 25.

The lamp 21 is a metal halide lamp or xenon lamp, for example. The light-guiding optical system 22 separates white light emitted from the lamp 21 into a red-waveband light (hereinafter, referred to as "R light"), a green-waveband light (hereinafter, referred to as "G light"), and a blue-waveband light (hereinafter, referred to as "B light"), and then radiates the separated lights to the liquid crystal panels 23, 24, and 25. The liquid crystal panels 23, 24, and 25 modulate the R, G, and B lights, and then the dichroic prism 26 combines the modulated lights and emits the same as image light.

Instead of the transmissive liquid crystal panels 23, 24, and 25, imagers constituting the optical system 20 may use reflective liquid crystal panels or MEMS devices. In addition, the optical engine 20 may not be a three-plate optical system including three imagers as described above, but may be a single-plate optical system using one imager and a color wheel, for example.

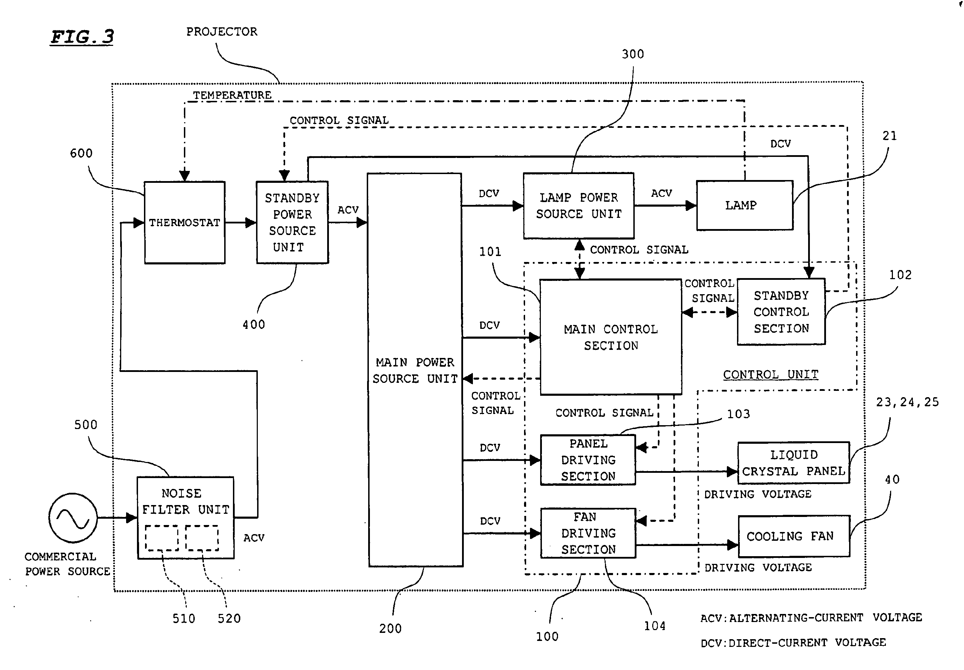

FIG. 3 is a block diagram showing a configuration of a projector.

The projector has a cooling fan 40 therewithin. The cooling fan 40 is a cooling fan for cooling the lamp 21, a power source cooling fan for cooling a power source section (a main power source unit, a standby power source unit, and a lamp power source unit), or a cooling fan for cooling the liquid crystal panels 23, 24, and 25, for example.

For driving and controlling the lamp 21, the liquid crystal panels 23, 24, and 25, and the like, the projector includes a control unit 100, a main power source unit 200, a lamp power source unit 300, a standby power source unit 400, a noise filter unit 500, and a thermostat 600.

The control unit 100 is constituted by a main control section 101, a standby control section 102, a panel driving section 103, and a fan driving section 104.

The main control section 101 is formed by a microcomputer and the like, and outputs control signals to the panel driving section 103 and the fan driving section 104, in accordance with operational signals from the operating section 14 and a remote control (not shown).

The standby control section 102 is formed by a microcomputer and the like that is lower in functionality (a smaller amount of memory, a slower processing speed, a smaller number of input terminals, or the like) than that in the main control section 101. Therefore, the standby control section 102 consumes a lower amount of power than the main control section 101.

When the projector is in a standby state, the standby control section 102 accepts input of operation signals from the operating section 14 and a remote control (not shown). In addition, the standby control section 102 accepts input of control signals from the main control section 101. The standby control section 102 outputs a control signal for supplying power (an alternating-current voltage) to the main power source unit 200 and a control signal for shutting off power (an alternating-current voltage) to the main power source unit 200, to the standby power source unit 400 in accordance with control signals from the operating section 14 and the like and control signals from the main control section 101.

The panel driving section 103 accepts input of image signals from an image signal processing section (not shown). The panel driving section 103 drives the liquid crystal panels 23, 24, and 25, in accordance with the input image signals and control signals from the control section 101. The fan driving section 104 drives the cooling fan 40 in accordance with control signals from the control section 101.

The main power source unit 200 converts an alternating-current voltage from a commercial power source into a prescribed direct-current voltage suitable for the components of the control unit 100 (except for the standby control sections 102) and the lamp power source unit 300, and supplies the same to the control unit 100 and the lamp power source unit 300.

The lamp power source unit 300 is formed by a lamp ballast and the like, and converts a direct-current voltage input from the main power source unit 200 into an alternating-current voltage suitable for driving the lamp 21, and supplies the same to the lamp 21.

The standby power source unit 400 converts an alternating-current voltage from a commercial power source into a direct-current voltage suitable for the standby control section 102, and outputs the same to the standby control section 102. In addition, the standby power source unit 400 supplies or shut off power to the main power source unit 200, in accordance with control signals from the standby control section 102. The standby power source unit 400 is disposed on a circuit board different from that other circuit sections are disposed on. A detailed configuration of the standby power source unit 400 will be described later.

The noise filter unit 500 includes a noise filter 510 and a current fuse 520. The noise filter 510 reduces entry of noise from a commercial power source to the main power source unit 200 and the standby power source unit 400. In addition, the noise filter unit 500 reduces high-frequency noise that is generated by switching operation of the main power source unit 200 and the standby power source unit 400 and is flown into the commercial power source side.

The current fuse 520 prevents overcurrent from flowing into the main power source unit 200 when the main power source unit 200 causes a short or the like. A rated current of the current fuse 520 is set in accordance with a rated current of the main power source unit 200.

The thermostat 600 is disposed near the lamp 21 to monitor a temperature of the lamp 21. When the lamp 21 overheats, a contact of the thermostat 600 is opened up to shut off a power supply line between the noise filter unit 500 and the standby power source unit 400. This halts power supply to the standby power source unit 400 and the main power source unit 200. In FIG. 3, the lamp 21 and the thermostat 600 are shown in separated positions for the sake of convenience.

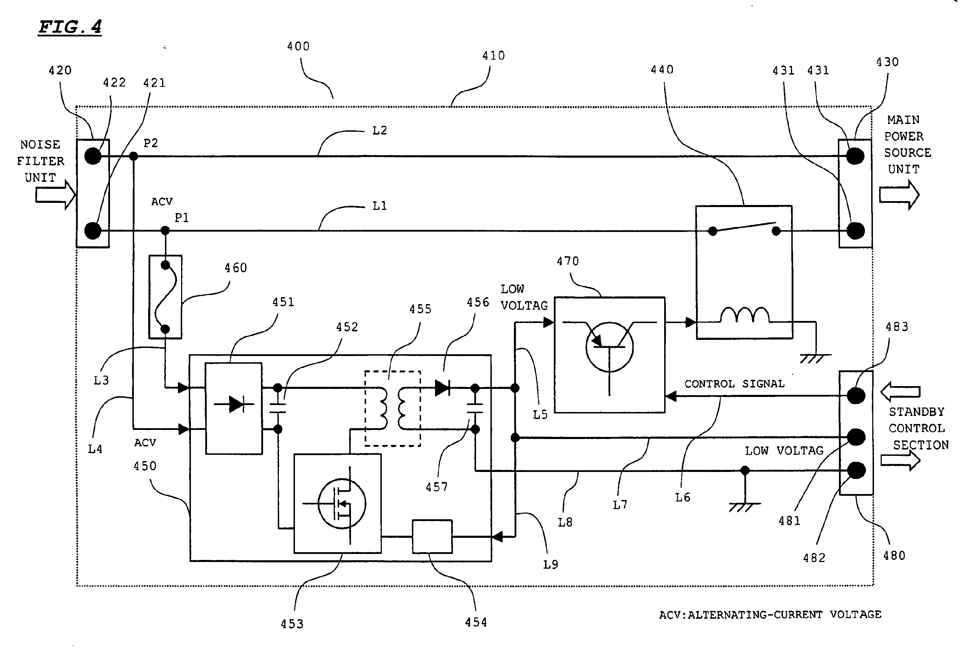

FIG. 4 is a diagram showing a configuration of the standby power source unit 400.

The standby power source unit 400 includes a substrate 410. The substrate 410 has a first connector 420, a second connector 430, a relay 440, a standby power source section 450, a current fuse 460, a transistor 470, and a third connector 480.

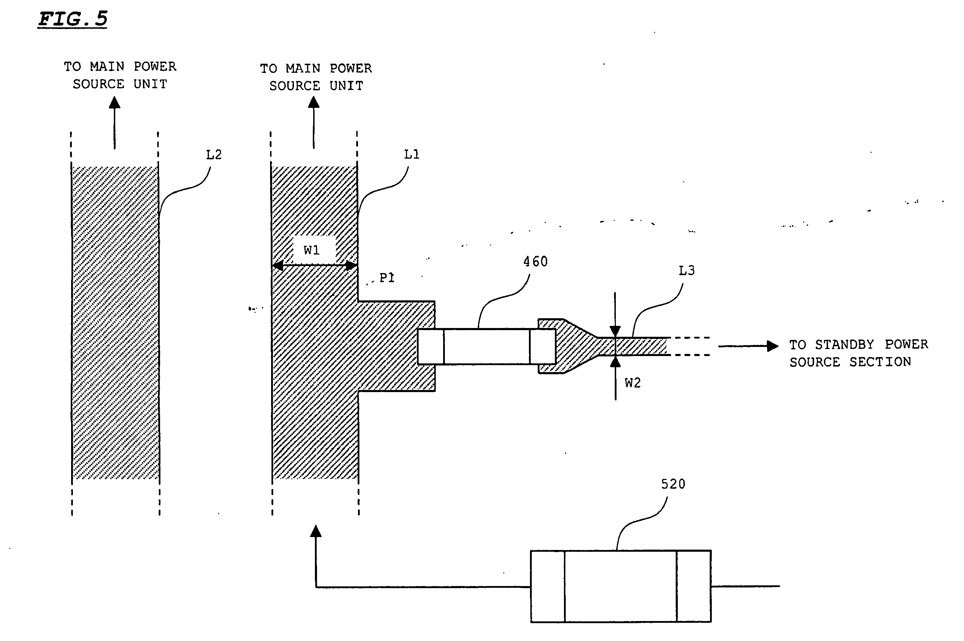

The first connector 420 includes a pair of power source input terminals 421 and 422. The second connector 430 includes a pair of power source output terminals 431 and 432. A power supply line L1 is formed in a conductive pattern on the substrate 410 on a live side of a commercial power source so as to link the power source input terminal 421 and the power source output terminal 431. In addition, a power supply line L2 is formed in a conductive pattern on the substrate 410 on a neutral side of the commercial power source so as to link the power source input terminal 422 and the power source output terminal 432 (refer to FIG. 5). The relay 440 is disposed on the power supply line L1.

The power supply lines L1 and L2 have branch points P1 and P2 respectively on an upstream side of the relay 440 (on the commercial power source side). Power supply lines L3 and L4 are branched from those branch points P1 and P2 and are connected to the standby power source section 450. The power supply lines L3 and L4 are also formed in conductive patterns on the substrate 410.

An alternating-current voltage, input from the power supply lines L1 and L2 into the standby power source section 450, is subjected by a rectifier circuit 451 formed of a diode bridge and the like to full-wave rectification, and is smoothed out by a smoothing condenser 452, and then is input as an almost direct-current voltage into a switching IC 453.

The switching IC 453 carries out switching operation to keep a voltage from a voltage feedback circuit 454 constant. The alternating-current voltage generated by the switching IC 453 is input via an isolating transformer 455 into a rectifier diode 456 and a smoothing condenser 457, and is converted again into a direct-current voltage by the rectifier diode 456 and the smoothing condenser 457.

Accordingly, a prescribed direct-current voltage is output from the standby power source section 450. Since the direct-current voltage is intended to drive the standby control section 102 and the relay 440, it is comparatively low (low voltage).

The current fuse 460 is disposed on the power supply line L3. A rated current of the current fuse 460 is set in accordance with a rated current of the standby power source section 450.

Since the standby power source section 450 is a power source only for the relay 440 and the standby control section 102, a rated current of the same is set significantly smaller than that of the main power source unit 200. Accordingly, a rated current of the current fuse 460 is made smaller than a rated current of the current fuse 520 in the noise filter unit 500 (about one tenth, for example).

When overcurrent flows into the power supply line L3 due to occurrence of a short or the like on the standby power source section 450, the current fuse 460 is cut out. This prevents overcurrent from flowing into the standby power source section 450. In this manner, owing to the current fuse 460, large current less flows into a downstream side of the current fuse 460 as compared to an upstream side of the same. Therefore, on the downstream side of the current fuse 460, a width W2 of the conductive pattern can be made significantly narrower than a width W1 of the conductive pattern on the power supply line L1, as shown in FIG. 5. For example, if a rated current of the current fuse 460 is about one-tenth of that of the current fuse 520, the width W2 of the power supply line L3 can be made about one-tenth of the width W1 of the power supply line L1. Therefore, the standby power source unit 400 can be reduced in size.

Returning to FIG. 4, the direct-current voltage output from the standby power source section 450 is supplied to the relay 440 via the power supply line L5. The transistor 470 is disposed on the power supply line L5. The transistor 470 accepts input of an ON signal from the standby control section 102, through the control signal line L6 connected to a signal input terminal 483 of the third connector 480.

Upon input of the ON signal from the standby control section 102, the transistor 470 is turned on to flow current into a coil of the relay 440. Accordingly, the contact point of the relay 440 is closed to connect the power supply line L1, thereby supplying power to the main power source unit 200.

Meanwhile, when the ON signal from the standby control section 102 is stopped, the transistor 470 is turned off to halt the flow of current into the coil of the relay 440. Accordingly, the contact point of the relay 440 is opened up to shut off the power supply line L1, thereby ceasing power supply to the main power source unit 200.

Power supply lines L7 and L8 are connected between the standby power source section 450 and a pair of power source output terminals 481 and 482 of the third connector 480. The standby power source section 450 supplies a direct-current voltage to the standby control section 102 via the third connector 480.

The standby power source section 450 supplies a direct-current voltage to a voltage feedback circuit 454 via a feedback signal line L9.

The power supply lines L5, L7, and L8, the control signal line L6, and the feedback signal line L9 are also formed in conductive patterns on the substrate 410.

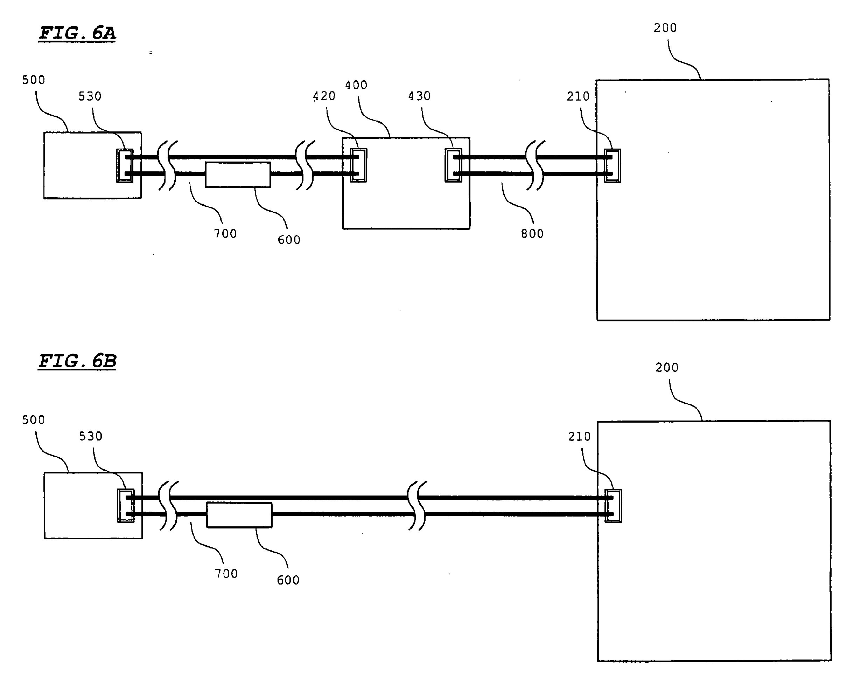

FIG. 6A is a diagram showing a connection structure of the main power source unit 200, the standby power source unit 400, and the noise filter unit 500 in this embodiment. FIG. 6B is a diagram showing a connection structure of the main power source unit 200 and the noise filter unit 500 in a conventional configuration.

As shown in FIG. 6A, the noise filter unit 500 has a connector 530 with power source output terminals. This connector 530 is connected by power cables 700 to the first connector 420 of the standby power source unit 400. Out of the two power cables 700, the thermostat 600 is disposed on the cable 700 on the live side. Accordingly, the noise filter unit 500 supplies power (an alternating-current voltage) to the standby power source unit 400 through the power cables 700.

Meanwhile, the main power source unit 200 has a connector 210 with power source input terminals. The connector 210 is connected by power cables 800 to the second connector 430 of the standby power source unit 400. Accordingly, the standby power source unit 400 supplies power (an alternating-current voltage) to the main power source unit 200 through the power cables 800.

As shown in FIG. 6B, conventionally, the connector 530 of the noise filter unit 500 is connected by the power cables 700 to the connector 210 of the main power source unit 200, and the noise filter unit 500 supplies power (an alternating-current voltage) directly to the main power source unit 200.

In this embodiment, differently from the conventional configuration, the power cables 700 are connected to the standby power source unit 400, and the standby power source unit 400 and the main power source unit are connected via the newly prepared power cables 800. Accordingly, the main power source unit 200, the noise filter unit 500, and the power cables 700 can be used as they are in the conventional configuration.

In addition, a planar size of the standby power source unit 400 (a size of the circuit board) can be made about one-fifth of a planar size of the main power source unit 200 (a size of the circuit board). Accordingly, if the standby power source unit 400 is formed integrally with the main power source unit 200, that is, if the circuit section of the main power source unit 200 and the circuit section of the standby power source unit 400 are implemented on one substrate, the power source unit will become significantly larger than the conventional main power unit 200.

In the interior of the cabinet 10, constitutional components are arranged in an optimum manner. Accordingly, if the main power source unit 200 is increased in planar size, there is a high possibility that the main power source unit 200 may interfere with other components. This results in the need to re-design a power source unit and also re-design a size of the cabinet 10 and a layout of components within the cabinet 10.

In this embodiment, the standby power source unit 400 is disposed on a substrate different from that the main power source unit 200 is disposed on, and is connected to the main power source unit 200 via the power cables 800. This allows the standby power source unit 400 to be disposed in a vacant space within the cabinet 10. Therefore, there is no need to re-design sizes of the main power source unit 200 and the cabinet 10 and a layout of components within the cabinet 10.

As compared to the conventional configuration, the standby control section 102 is added to the control unit 100 in this embodiment. However, the standby control section 102 is formed by small electronic parts and therefore hardly increases the size of the control unit 100.

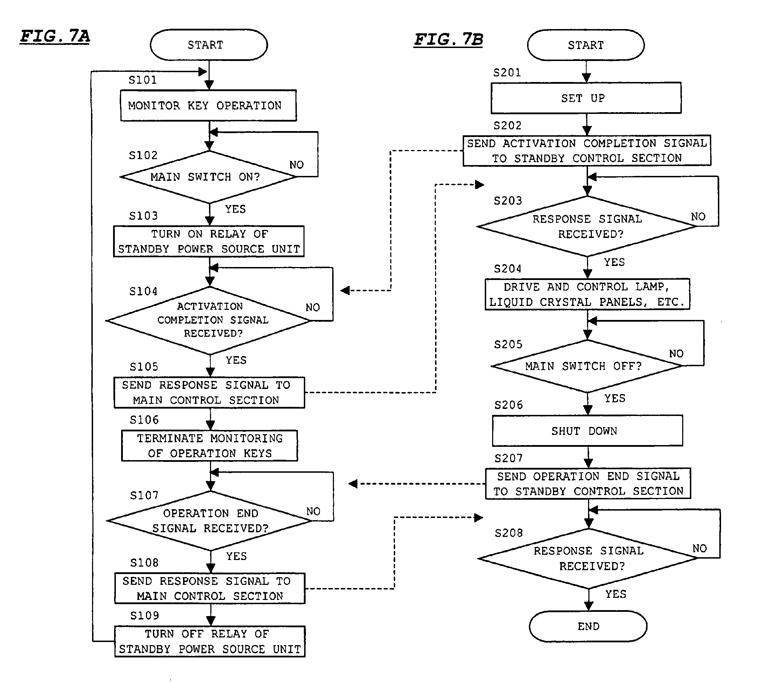

FIG. 7A is a diagram showing a process flow of the standby control section 102, and FIG. 7B is a diagram showing a process flow of the main control section 101.

When the projector is connected to a commercial power source, the standby power source section 450 supplies power to activate the standby control section 102. Accordingly, the projector enters into a standby state.

At that time, since the standby control section 102 does not output an ON signal and the relay 440 is in an off state, no power is supplied to the main power source unit 200. Accordingly, in the standby state, power supply takes place only from the standby power source section 450 to the standby control section 102, resulting in extremely low power consumption.

The standby control section 102 starts monitoring of key operation on the operating section 14 and the like (S101), and determines whether the main switch is turned on (S102).

If the projector is to be started, the user turns on the main switch. When the main switch is turned on (S102: YES), the standby control section 102 outputs an ON signal to the standby power source unit 400 to turn on the relay 440 (S103).

When the relay 440 is turned on, power is supplied to the main power source unit 200. Accordingly, the main power source unit 200 supplies power to the main control section 101 to activate the main control section 101.

The main control section 101 first performs a setup process for entering the projector into an operational state (S201). Then, upon completion of the setup process, the main control section 101 sends an activation completion signal indicative of the completion of activation to the standby control section 102 (S202).

Upon receipt of the activation completion signal from the main control section 101 (S104: YES), the standby control section 102 sends a response signal to the main control section 101 (S105). In addition, the standby control section 102 terminates monitoring of key operation, that is, terminates control in the standby state (S106).

Upon receipt of the response signal from the standby control section 102 (S203: YES), the main control section 101 drives and controls the lamp 21 and the liquid crystal panels 23, 24, and 25 and the like for start of operation (S204). Accordingly, an image is projected onto a screen in accordance with input image signals.

If the operation of the projector is to be terminated, the user turns off the main switch. When the main switch is turned off (S205: YES), the main control section 101 performs a prescribed shutdown process to shift the projector into the standby state (S206). Then, upon completion of the shutdown process, the main control section 101 sends an operation end signal indicative of the end of operation, to the standby control section 102 (S207). Next, upon receipt of a response signal from the standby control section 102 (S208: YES), the main control section 101 terminates the process.

Upon receipt of the operation end signal from the main control section 101 (S107: YES), the standby control section 102 sends a response signal to the main control section 101 (S108). After that, the standby control section 102 stops output of an ON signal to the standby power source unit 400 to turn off the relay 440 within the standby power source unit 400 (S109). Accordingly, power supply to the main power source unit 200 comes to a halt.

Accordingly, when the projector enters again into the standby state, the standby control section 102 re-starts monitoring of key operation (S101).

As described above, in this embodiment, when the projector is in the standby state, power supply to the main power source unit 200 is stopped and minimum power is supplied from the standby power source unit 400 to the standby control section 102 for operation. This allows reduction in standby power consumption.

In addition, since the standby power source unit 400 on a different substrate can be disposed in the vacant space within the cabinet 10, there is no need to re-design sizes of the main power source unit 200 and the cabinet 10 and a layout of components. Therefore, it is possible to suppress costs, time, and labor for realizing the function of reducing standby power consumption.

In this embodiment, the power supply lines L3 and L4 are branched from the power supply lines L1 and L2 on the upstream side of the relay 440 to supply power to the standby power source section 450. Further, the noise filter 510 is disposed on the upstream side of the branch points P1 and P2. Therefore, it is possible to reduce noise in both the main power source unit 200 and the standby power source section 450 only by the one noise filter 510.

Furthermore, since the thermostat is disposed on the upstream side of the branch point P1 and P2, when the lump 21 is overheats, it is possible to cease power supply to both the main power source unit 200 and the standby power source section 450.

Moreover, the branch points P1 and P2 are configured in conductive patterns on the substrate 410, whereby power supplied to the standby power source unit 400 can be easily distributed to the standby power source section 450. This eliminates the need to connect power cables from the noise filter unit 500 to the power supply lines L1 and L2 and the standby power source section 450, thereby decreasing the number of required cables.

In addition, in this embodiment, the standby power source unit 400 has the first connector 420 and the second connector 430 to which the power cables 700 and 800 are connected. That is, since no cable is directly attached to the standby power source unit 400, the power cables do not interfere with installing the standby power source unit 400 within the cabinet 10.

### <Modification example 1>

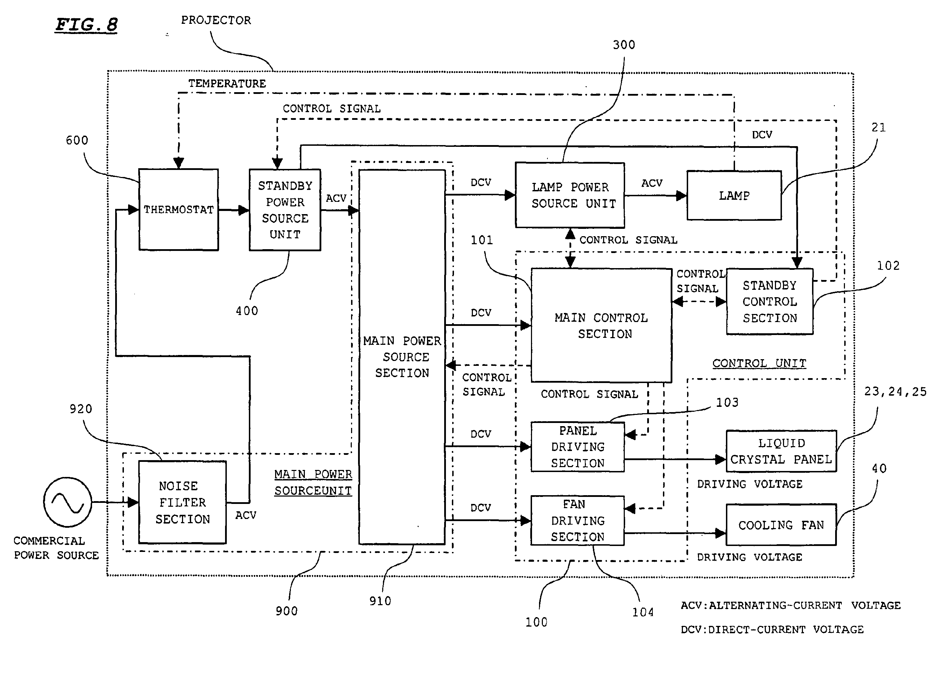

FIG. 8 is a block diagram showing a configuration of a projector in modification example 1.

In this modification example, a main power source section 910, which is equivalent to the main power source unit 200 in the foregoing embodiment, and a noise filter section 920, which is equivalent to the noise filter unit in the foregoing embodiment, are disposed on one substrate to configure a main power source unit 900. Other components of the modification example are identical to those in the foregoing embodiment.

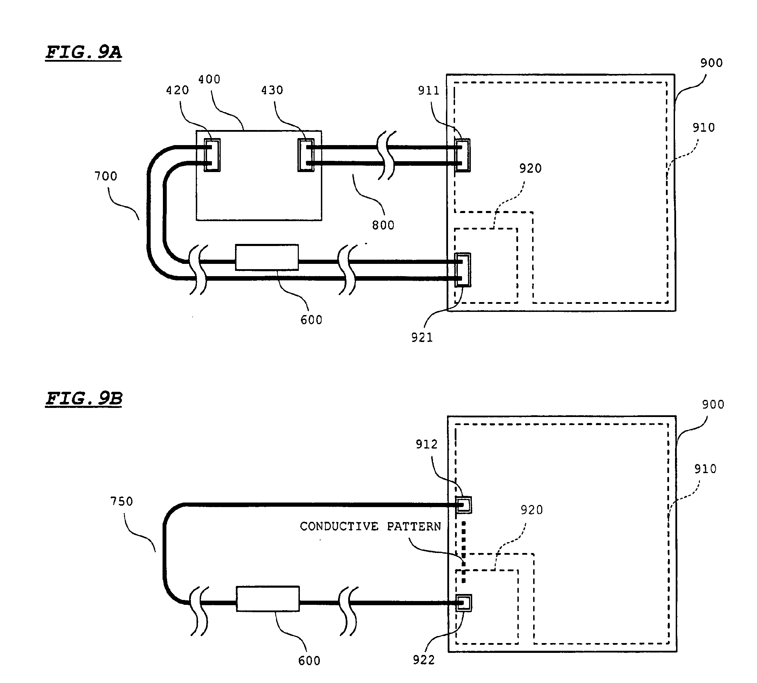

FIG. 9A is a diagram showing a connection structure of the main power source section 910, the standby power source unit 400, and the noise filter section 920 in modification example 1. FIG. 9B is a diagram showing a connection structure of a main power source section 910 in the main power source unit 900 and the noise filter section 920 in a conventional configuration.

As shown in FIG. 9A, in modification example 1, a connector 921 of the noise filter section 920 and a first connector 420 of the standby power source unit 400 are connected via the power cables 700. In addition, a connector 911 of the main power source section 910 and a second connector 430 of the standby power source unit 400 are connected via the power cables 800.

Meanwhile, in the conventional configuration as shown in FIG. 9B, only a power cable 750 on the live side with the thermostat 600 is connected to a connector 922 of the noise filter section 920 and a connector 912 of the main power source section 910, thereby to dispose the thermostat 600 at a prescribed position near the lamp 21. A power supply line at the neutral side is formed in a conductive pattern on the substrate.

Therefore, in the projector of modification example 1, it is necessary to make a change to the connector parts for disposition of the standby power source unit 400. However, even in this case, a minimum design change is made to the main power source unit 900. In addition, there is no need to re-design a size of the cabinet 10 or a layout of components within the cabinet 10.

In addition, the thermostat 600 may not be provided. In this case, conventionally, both the power supply lines between the main power source section 910 and the noise filter section 920 are formed in conductive patterns. Accordingly, in this case, if the configuration of modification example 1 is used, it is necessary to make a change to the connector parts for disposition of the standby power source unit 400.

Besides, the embodiment of the present invention can be appropriately modified in various manners within the scope of technical ideas shown in the claims.

## Claims

1. A projection display device, comprising:
a main control section (101) that performs control in a normal operation state;
a standby control section (102) that performs control in a standby state;
a main power source unit (200; 910) that supplies power to the main control section (101); and
a standby power source unit (400) that shuts off power supply from a commercial power source to the main power source unit (200; 910) and supplies power to the standby control section (102) in the standby state, wherein
the standby power source unit (400) is disposed on a substrate (410) different from that the main power source unit (200; 910) is disposed on;
a light source (21); and
a light modulating section (23, 24, 25) that modulates light from the light source (21); said main control section (101) driving and controlling the light source (21) and the light modulating section (23, 24, 25) for operation
a noise filter (510) being interposed between the commercial power source and the standby power source unit (400)
**characterized in that**
the standby control section (102) is adapted to consume a lower amount of power than the main control section (101), and that
a shutoff device (600) is interposed between the noise filter (510) and the standby power source unit (400) to shut off a power supply line for supplying power from a commercial power source to the main power source unit (200; 910) and to the standby power source unit (400) if the light source (21) overheats, wherein the shutoff device (600) and the noise filter (510) are arranged on the power supply line upstream of the standby power source unit (400).

2. The projection display device according to claim 1, wherein the standby power source unit (400) includes:
a power source section (450) that supplies power to the standby control section (102); and
a switch section (440) that connects or shuts off the power supply line in accordance with a signal from the standby control section (102).

3. The projection display device according to claim 2, wherein power is supplied to the power source section from the power supply line on an upstream side of the switch section (440), and a fuse (460) is interposed between the power supply line and the power source section (450).

## Patentansprüche

1. Projektionsanzeigevorrichtung mit:
einem Hauptsteuerabschnitt (101), der eine Steuerung in einem Normalbetriebszustand durchführt,
einem Bereitschaftssteuerabschnitt (102), der eine Steuerung in einem Bereitschaftszustand durchführt,
einer Hauptversorgungsquelleneinheit (200, 910), die Leistung an den Hauptsteuerabschnitt (101) liefert, und
einer Bereitschaftsversorgungsquelleneinheit (400), die die Versorgungszufuhr von einer kommerziellen Leistungsquelle an die Hauptversorgungsquelleneinheit (200; 910) abschneidet und Leistung an den Bereitschaftssteuerabschnitt (102) in dem Bereitschaftszustand liefert, wobei
die Bereitschaftsleistungsquelleneinheit (400) auf einem Substrat (410) angeordnet ist, das sich von dem, auf dem die Hauptversorgungsquelleneinheit (200; 910) angeordnet ist, unterscheidet,
einer Lichtquelle (21) und
einem Lichtmodulationsabschnitt (23, 24, 25), der Licht von der Lichtquelle (21) moduliert, wobei der Hauptsteuerabschnitt (101) die Lichtquelle (21) und den Lichtmodulationsabschnitt (23, 24, 25) für den Betrieb antreibt und steuert,
einem Rauschfilter (510), der zwischen der kommerziellen Versorgungsquelle und der Bereitschaftsversorgungsquelleneinheit (400) eingefügt ist,
**dadurch gekennzeichnet, dass**
der Bereitschaftssteuerabschnitt (102) ausgebildet ist, um weniger Leistung als der Hauptsteuerabschnitt (101) zu verbrauchen und dass
eine Abschneidevorrichtung (600) zwischen den Rauschfiltern (510) und der Bereitschaftsversorgungsquelleneinheit (400) angeordnet ist, um eine Versorgungszufuhrleitung zur Zufuhr von Leistung von einer kommerziellen Leistungsquelle an die Hauptversorgungsquelleneinheit (200; 910) und an die Bereitschaftsversorgungsquelleneinheit (400) abzustellen, falls die Lichtquelle (21) sich überheizt, wobei die Abschneidevorrichtung (600) und der Rauschfilter (510) in der Versorgungszufuhrleitung Strom auf der Bereitschaftsversorgungsquelleneinheit (400) angeordnet sind.

2. Projektionsanzeigevorrichtung nach Anspruch 1, wobei die Bereitschaftsversorgungsquelleneinheit (400) aufweist:
einen Versorgungsquellenabschnitt (450), der Leistung an den Bereitschaftssteuerabschnitt (102) liefert, und
einen Schaltabschnitt (440), der die Versorgungszufuhrleitung in Übereinstimmung mit einem Signal von dem Bereitschaftssteuerabschnitt (102) verbindet oder abschneidet.

3. Projektionsanzeigevorrichtung nach Anspruch 2, wobei Leistung zu dem Versorgungsquellenabschnitt von der Versorgungszufuhrleitung auf einer stromauf liegenden Seite des Schaltabschnittes (440) zugeführt wird und eine Sicherung (460) zwischen der Versorgungszufuhrleitung und dem Versorgungsquellenabschnitt (450) eingefügt ist.

## Revendications

1. Dispositif d'affichage de projection, comprenant :
une section de commande principale (101) qui exécute une commande dans un état de fonctionnement normal ;
une section de commande de veille (102) qui exécute une commande dans un état de veille ;
une unité formant source d'alimentation principale (200 ; 910) qui délivre de l'énergie à la section de commande principale (101) ; et
une unité formant source d'alimentation de veille (400) qui interrompt la source d'alimentation à partir d'une source d'alimentation en réseau vers l'unité formant source d'alimentation principale (200 ; 910) et délivre de l'énergie à la section de commande de veille (102) dans l'état de veille, dans lequel
l'unité formant source d'alimentation de veille (400) est disposée sur un substrat (410) différent de celui sur lequel est disposée l'unité formant source d'alimentation principale (200 ; 910) ;
une source de lumière (21); et
une section de modulation de lumière (23, 24, 25) qui module la lumière à partir de la source de lumière (21) ; ladite section de commande principale (101) attaquant et commandant le fonctionnement de la source de lumière (21) et de la section de modulation de lumière (23, 24, 25)
un filtre de bruit (510) étant interposé entre la source d'alimentation en réseau et l'unité formant source d'alimentation de veille (400)
**caractérisé en ce que**
la section de commande de veille (102) est adaptée de manière à consommer une quantité d'énergie inférieure à celle de la section de commande principale (101), et **en ce que**
un dispositif de coupure (600) est interposé entre le filtre de bruit (510) et l'unité formant source d'alimentation de veille (400) de manière à interrompre une ligne de source d'alimentation destinée à délivrer de l'énergie à partir d'une source d'alimentation en réseau à l'unité formant source d'alimentation principale (200 ; 910) et à l'unité formant source d'alimentation de veille (400) si la source de lumière (21) surchauffe, dans lequel le dispositif de coupure (600) et le filtre de bruit (510) sont agencés sur la ligne de source d'alimentation en amont de l'unité formant source d'alimentation de veille (400).

2. Dispositif d'affichage de projection selon la revendication 1, dans lequel l'unité formant source d'alimentation (400) comporte :
une section de source d'alimentation (450) qui délivre de l'énergie à la section de commande de veille (102) ; et
une section de commutation (440) qui raccorde ou interrompt la ligne de source d'alimentation en fonction d'un signal provenant de la section de commande de veille (102).

3. Dispositif d'affichage de projection selon la revendication 2, dans lequel de l'énergie est délivrée à la section de source d'alimentation à partir de la ligne de source d'alimentation d'un côté amont de la section de commutation (440), et un fusible (460) est interposé entre la ligne de source d'alimentation et la section de source d'alimentation (450).
